Europäisches Patentamt

European Patent Office

Office européen des brevets

(11) Publication number: **0 327 385**
**A1**

# EUROPEAN PATENT APPLICATION

(21) Application number: **89301073.6**

(22) Date of filing: **03.02.89**

(51) Int. Cl.⁴: **H 02 B 1/04**
**H 02 B 1/20**

(30) Priority: **05.02.88 GB 8802663**

(43) Date of publication of application:
**09.08.89 Bulletin 89/32**

(84) Designated Contracting States:
**AT BE CH DE ES FR GB IT LI**

(71) Applicant: **DELTA ELECTRICAL (HOLDINGS) LIMITED**
**1 Kingsway**
**London WC2B 6XF (GB)**

(72) Inventor: **Holmes, David Arthur**
**28, Chantry Close, Hollywood**
**Birmingham B47 5LU (GB)**

**Varga, Tibor Gyorgy**
**27 Lon Gardener, Valley, Holyhead**
**Gwynedd LL65 3 DN (GB)**

(74) Representative: **Shindler, Nigel et al**
**BATCHELLOR, KIRK & EYLES 2 Pear Tree Court**
**Farringdon Road**
**London EC1R 0DS (GB)**

(54) A mounting assembly for electrical device.

(57) A mounting assembly for electrical devices comprising a mounting rail with opposed flanges in combination with a bus-bar mounted in a fixed parallel position relative to the mounting rail, the bus-bar having projections adapted to receive at least one cooperating electrical device of a predetermined configuration, which is such that the electrical device may be engaged with a cooperating projection to enable electrical connections to be established, while in the same operation the electrical device is engaged with the mounting rail,

Fig.1

Description

## A Mounting Assembly for Electrical Devices

The present invention relates to the mounting of electrical devices, for example circuit breakers, on an assembly which incorporates a rail on which each device is mounted, and one or more bus-bars to which the electrical devices can be connected.

It is well known to mount electrical devices such as circuit breakers on a mounting rail, so that they are firmly held, and can be connected to a bus-bar. These rails, usually have two, opposed, outwardly turned lips or flanges with which the electrical devices co-operatively engage. For full fixing a fixed lip or nose on the underside of the electrical device engages under one lip or flange of the mounting rail, while a sprung nose-like portion, releasably engages with the opposite flange on the mounting rail. There are various standard forms of such mounting rails. The existence of a DIN standard has led to such mounting rails being referred to as "DIN-rails", but there are also other standards, for example, there is a EN standard, 50 022. The present invention is concerned with problems encountered with various types of mounting rail.

The object of having a mounting rail is to provide a secure fixing for electrical devices which are connected to one, and sometimes more than one, bus-bar, while allowing ready replacement of the electrical devices. Hence the provision of the releasable engagement of the electrical device with the mounting rail. However the removal or addition of an electrical device has, in the past, required the disconnection and removal of the bus-bar(s), because the bus-bars were simply mounted on terminals on top of the electrical device(s).

There have been various proposals for overcoming the problem but these have all in some way detracted from the function of the mounting assembly, for example, GB-A-2007434 describes a mounting assembly where half a conventional mounting rail is omitted leaving only one engagement flange, which allows the circuit breaker or the like to be slid into place on the rail and simultaneously engaged with the bus-bar. The electrical device is then held between the bus-bar and the one flange of the mounting rail, thus losing some of the security provided by the double flange arrangement of the conventional mounting rail. Another proposal, GB-A-2119576, involved having a convoluted bus-bar and each electrical device having a projection which could be secured to a projecting arm of the bus-bar. The conventional electrical device has to be fitted to the mounting rail by a particular process which involves hooking the fixed nose on the bottom of the device over the flange on the rail on the side adjacent the bus-bar, and then pivoting the device down on to the rail until the sprung nose engages the flange on the opposite side of the rail to the bus-bar. Because of this method of insertion in GB-A-2119576, the projecting arms of the bus-bar have to have a serpentine construction. Furthermore, it is undesirable to have an electrically conductive member projecting from the electrical device.

The present invention seeks to provide a mounting assembly for electrical devices in which the electrical devices can be mounted on or demounted from a mounting rail without removal of a bus-bar to which the devices are to be connected.

Accordingly a first aspect of the invention provides a mounting assembly for electrical devices comprising a mounting rail with opposed flanges in combination with a bus-bar mounted in a fixed parallel position relative to the mounting rail, the bus-bar having projections adapted to receive at least one cooperating electrical device of a predetermined configuration, the arrangement being such that the electrical device may be engaged with a cooperating projection to enable electrical connections to be established, while in the same operation the electrical device is engaged with the mounting rail, and that the device may be demounted from the assembly, without movement of the bus-bar.

A preferred form of the mounting assembly comprises a mounting rail with opposed flanges and a bus-bar spaced apart from and substantially parallel to the mounting rail, the bus-bar having spaced-apart spigots or tongues which project in a direction at right angles to the mounting rail.

A second aspect of the invention provides an electrical device adapted for mounting on the said assembly, and having a socket or recess to receive one of the tongues of the bus-bar and opposed hook members to engage around the flanges of the mounting rail.

The invention also extends to a mounting assembly for electrical devices comprising: a mounting rail with opposed flanges; a bus-bar positioned, spaced apart from and substantially parallel to the mounting rail; and an electrical device having a body, mountable on the mounting rail by means of opposed hook members which can engage the opposed flanges on the mounting rail; characterised in that the bus-bar has spaced apart spigots projecting towards the mounting rail; the electrical device having a connector, whereby the electrical device can be mounted on the rail while a spigot on the bus-bar is being received by the connector.

Preferably the shape of the electrical device is formed to facilitate the mounting process, for example by having the lower leading edge of the body of the electrical device, which passes over the flange on the side of the mounting rail adjacent to the bus-bar, cut away to provide a tapering profile.

A preferred embodiment of the invention will now be described by way of example and with reference to the accompanying drawings, wherein:

Figure 1 is a perspective view of a mounting rail and bus-bar assembly according to the preferred embodiment;

Figure 1a is a partial perspective view of an alternative arrangement to that of Figure 1;

Figure 2 is a schematic side cross-section through a mounting system according to the preferred embodiment, showing how an electrical device can be fitted;

Figure 3 shows front, side and plan views of an electrical device fitted to a mounting system according to the preferred embodiment; and

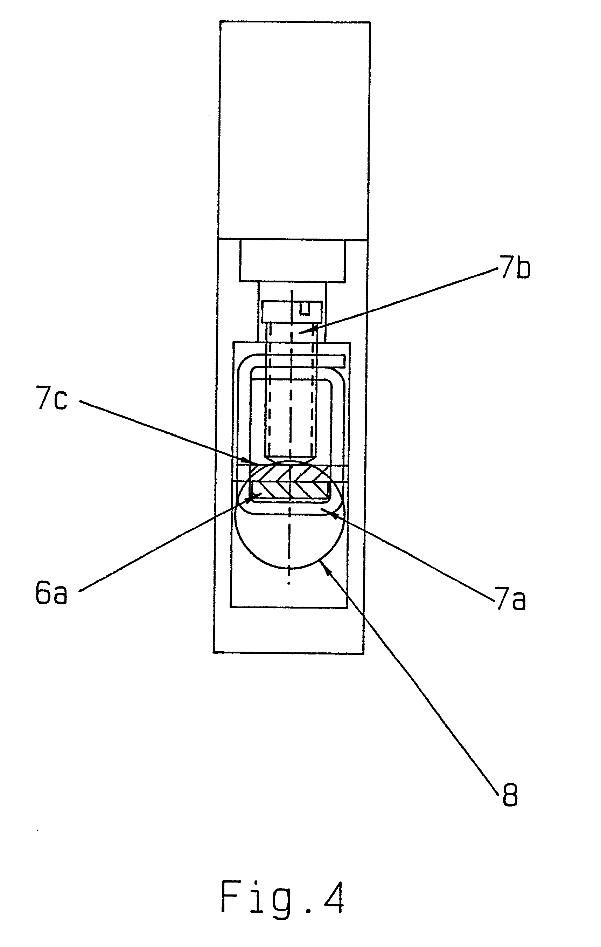

Figure 4 is a detail of a side view of the electrical device of Figure 3.

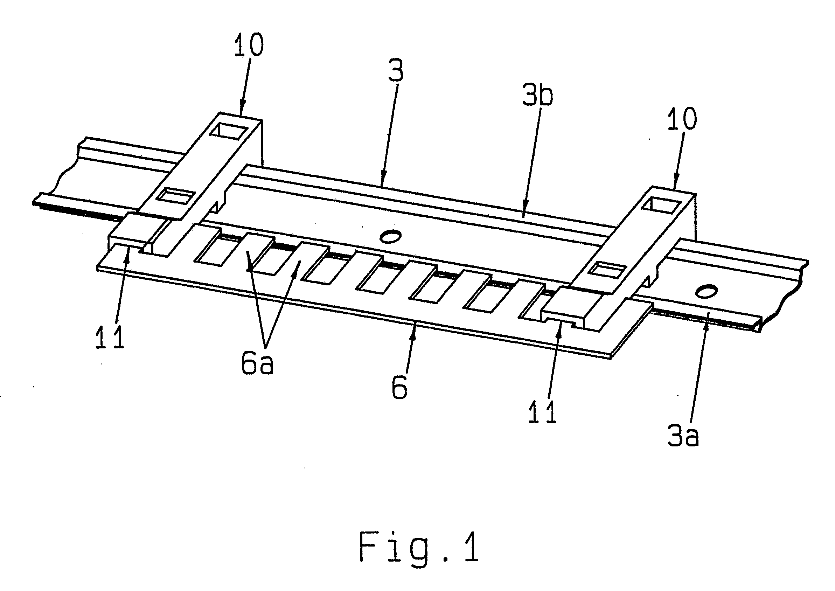

Referring first to Figure 1, a mounting system according to the preferred embodiment of the invention generally comprises a EN standard mounting rail 3, and a bus-bar 6 held in fixed and spaced relation to the mounting rail 3 by means of mounting members 10 which are secured to the mounting rail 3. The mounting rail 3 is to the EN standard 50022 and will not be described further in any detail, except to note that the rail has opposed flanges 3a, 3b. The bus-bar 6 is an elongate metal bar of substantial thickness with laterally extending spigots or fingers 6a at intervals along its length. The mounting brackets 10 are generally elongate rectangular sectioned members which are fixed to the standard mounting rail 3 by means of bolts or clamps or opposed hook members which engage the opposed flanges, and which each have a socket 11 for receiving one of the spigots 6a of the bus-bar 6. Each spigot 6a is secured in the socket 11 of the mounting bracket 10 by means of a fixing screw (not shown). Alternatively as shown in Figure 1a, the bracket 100 may be provided with an open recess 110 in its outer end, terminating in a slot 112 which receives the end of the tongue 114 of the bus-bar. An integrally formed resilient retaining tongue 116 can be sprung outwardly to allow the bus-bar to be inserted or removed. The mounting brackets hold the bus bar 6 in spaced, parallel relation to the mounting rail 3.

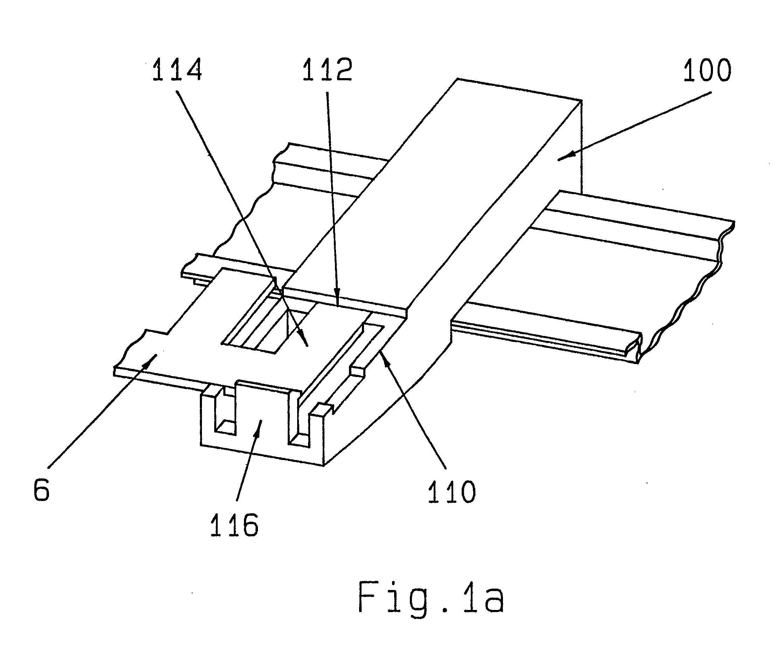

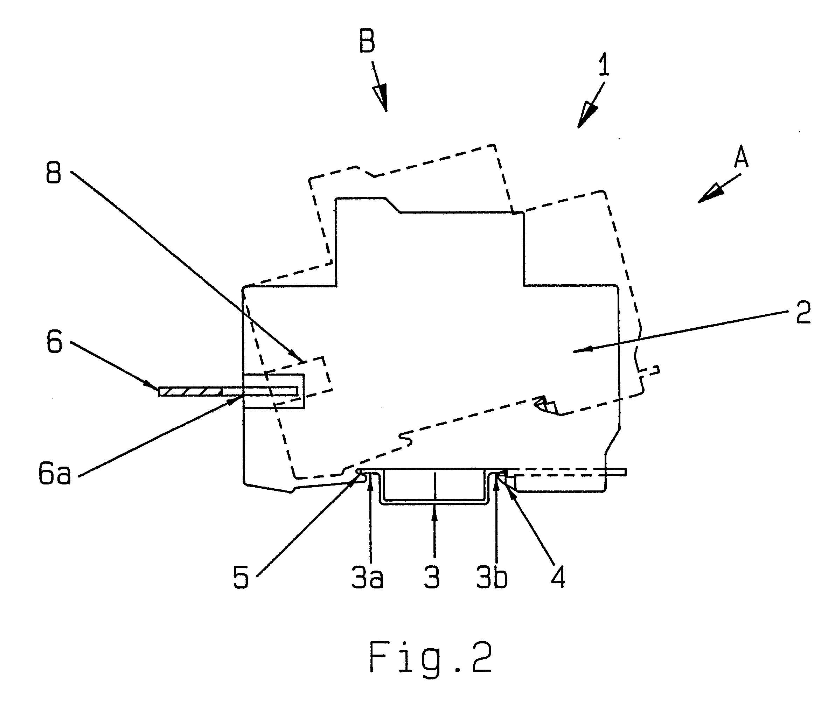

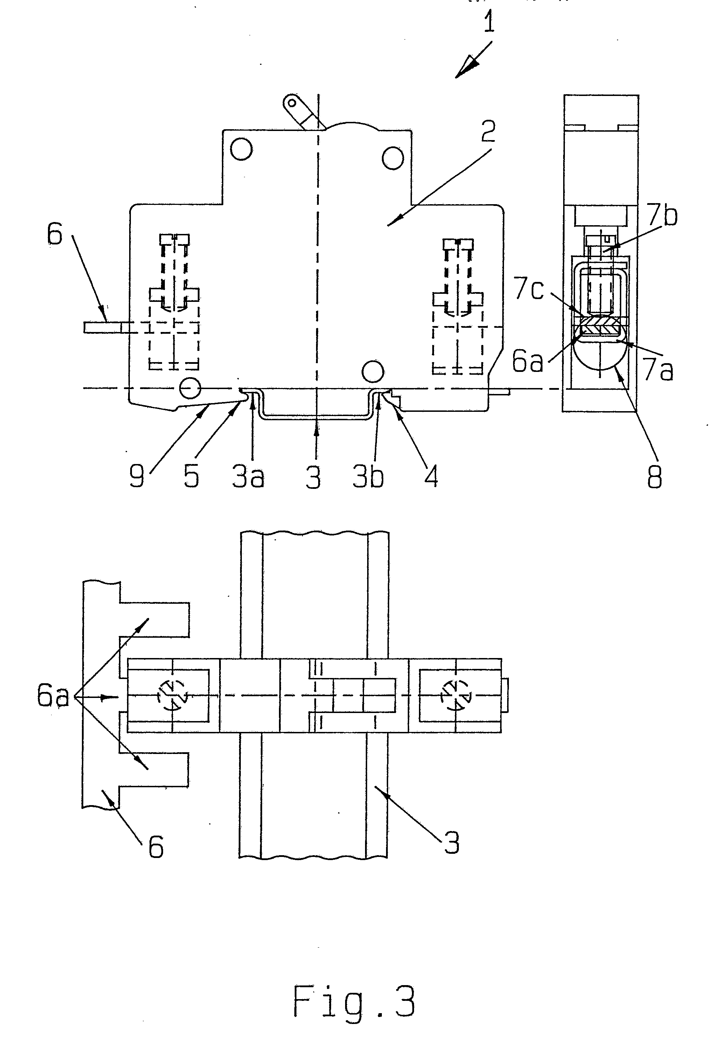

Referring to Figures 2 and 3, a electrical device, here shown for illustration only as an MCB (miniature circuit breaker) 1 has a body 2. The MCB has in one side a blind hole 8 which contains a connector 7. The MCB has the usual underside recess with hook member 5 for engaging one side of the mounting rail 3 and a spring-loaded latch mechanism 4 for engaging the other other side of the mounting rail 3. The connector 7 generally comprises a metal clamping sheath 7a through which passes, from above, a screw 7b to bear down on a plate 7c.

The underside of the body 2 of the MCB 1 is cut away or tapered adjacent to the hook 5 to facilitate mounting on the mounting rail as shown in Figure 2.

The MCB is fitted onto the mounting assembly by being moved down, at an angle, towards both the bus-bar and the mounting rail 3, (arrow A, Figure 2) so that a spigot 6a of the bus-bar 6 is received into the blind hole 8 and the hook member 5 on the MCB 2 passes over the flange of the mounting rail 3 adjacent the bus-bar 6. Once the spigot 6a is received into the blind hole 8 the MCB 1 is moved back so that the hook member 5 engages the flange adjacent to the bus-bar 6 and is then pivoted (arrow B) so that the latch mechanism 4 engages the opposite flange of the mounting rail 3. The spigot 6a is received into the connector 7 as the MCB 1 is fitted onto the mounting system. The spigot 6a can then be trapped between the clamp 7a and the plate 7c and secured by the screw 7b being tightened to exert pressure on spigot 6a between clamp 7a and plate 7c.

The MCB 1 is now held by the mounting rails 3 while being electrically connected to the bus-bar 6 through the connector 7.

**Claims**

1. A mounting assembly for electrical devices comprising a mounting rail with opposed flanges in combination with a bus-bar mounted in a fixed parallel position relative to the mounting rail, the bus-bar having projections adapted to receive at least one cooperating electrical device of a predetermined configuration, the arrangement being such that the electrical device may be engaged with a cooperating projection to enable electrical connections to be established, while in the same operation the electrical device is engaged with the mounting rail, and that the device may be demounted from the assembly without movement of the bus-bar.

2. A mounting assembly for electrical devices comprising a mounting rail with opposed flanges and a bus-bar spaced apart from and substantially parallel to the mounting rail, the bus-bar having spaced-apart projections which project in a direction at right angles to the mounting rail.

3. A mounting assembly according to claim 1 or claim 2 further comprising at least two brackets for mounting the bus-bar on the rail, each said bracket comprising a recess to receive one of the projections of the bus-bar, and retaining means for retaining the said projection in position; and also including opposed detent members for engaging the opposed flanges of the mounting rail.

4. An electrical device adapted for mounting on the assembly of any of claims 1 to 3 and having a socket or recess to receive one of the projections of the bus-bar, and opposed detent members to engage around the flanges of the mounting rail.

5. An electrical device according to claim 3 in which one of the detent members is formed as a retractable latch so that the device can be pivoted into position to engage the mounting rail while the projection of the bus-bar is entering the socket of the device.

6. An assembly comprising a mounting rail and a bus-bar according to any of claims 1 to 3 in combination with at least one electrical device according to claim 4 or claim 5.

Fig.1

EP 0 327 385 A1

Fig.1a

100

112

114

110

116

6

Fig.2

Fig.3

Fig.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4 ) |
|---|---|---|---|
| Y | EP-A-0229590 (CMC AG)<br>* column 9, line 43 - column 10, line 5; figure 10 *<br>--- | 1, 2,<br>4-6 | H02B1/04<br>H02B1/20 |
| Y,D | GB-A-2007434 (J.A.CRABTREE & CO)<br>* abstract; figure 4 *<br>--- | 1, 2,<br>4-6 | |
| A | EP-A-0155905 (WEBER AG)<br>* abstract; figures 1-3 *<br>--- | 1, 4-6 | |
| A | FR-A-2438359 (B.B.C.)<br>* page 3, line 18 - line 33; figure 1 *<br>----- | 1, 3 | |
| | | | **TECHNICAL FIELDS SEARCHED (Int. Cl.4 )**<br><br>H02B<br>H01R |

The present search report has been drawn up for all claims

| Place of search | Date of completion of the search | Examiner |
|---|---|---|
| THE HAGUE | 09 MAY 1989 | WOODALL C.G. |

EPO FORM 1503 03.82 (P0401)